# EUROPÄISCHE PATENTANMELDUNG

(11) **EP 0 957 289 A1**
(43) Veröffentlichungstag der Anmeldung: **17.11.1999**
(21) Anmeldenummer: 99107931.0
(22) Anmeldetag: 22.04.1999
(51) Int. Cl.: F16G 1/28, F16H 7/02

(54) **Formschlüssige und selbstführende Antriebsanordnung**

(30) Priorität: 09.05.1998 DE 19820876
(71) Anmelder: ContiTech Antriebssysteme GmbH, 30165 Hannover (DE)
(72) Erfinder: Göser, Hubert, 29451 Dannenberg (DE); Winkler, Thomas, 29451 Dannenberg (DE); Pfannschmidt, Andreas, 29451 Dannenberg (DE); Aue, Rüdiger, 29451 Dannenberg (DE)
(74) Vertreter: Schneider, Egon

(57) **Zusammenfassung**

Bei einer aus Synchronriemen (2) und Synchronscheibe (28) bestehenden formschlüssigen und selbstführenden Antriebsanordnung soll der Riemen (2) als Meterware und endlos produzierbar und in jeder beliebigen Breite ablängbar (abstechbar) sein.

Auf der Lauffläche (6) des Synchronriemens (2) befinden sich Noppen (8) und auf der Antriebsfläche der Synchronscheibe (28) entsprechende, zu den Noppen (8) kongruente Ausnehmungen (30). Die Breite (16) des Riemens (2) ist mindestens gleich der Breite (18) einer einzelnen Noppe (8).
Die Form der Noppen (8) bzw. der entsprechenden Ausnehmungen (30) kann zylindrisch, halbkugelig, halbellipsoid, kegel- oder kegelstumpfförmig sein. Die Noppen (8) sind vorzugsweise zueinander versetzt auf dem Riemen (2) angeordnet.

Neben der Verwendung der aus Riemen (2) und Scheibe (28) bestehenden Antriebsanordnung ergeben sich weitere Anwendungsbereiche in der Transport-, Linear- und Hubtechnik.

## Beschreibung

Die Erfindung betrifft eine aus Synchronriemen und Synchronscheibe bestehende formschlüssige und selbstführende Antriebsanordnung.

Synchronriemen, die auf Synchronscheiben (Zahnscheiben) umlaufen, werden üblicherweise durch seitlich an den Zahnscheiben angeordnete Bordscheiben geführt. Es gibt aber auch Fälle, wo aus Platzgründen die Anbringung von Bordscheiben nicht möglich ist. Die Anbringung von Bordscheiben ist mit zusätzlichen Kosten verbunden.

Um auch ohne Verwendung von Bordscheiben eine hinreichende seitliche Führung zu erhalten, schlägt die US-PS 2.770.977 vor, auf dem Synchronriemen mindestens eine Längsrippe und auf der zugeordneten Synchronscheibe (mindestens) eine entsprechende Ringnut vorzusehen. Durch einen derartigen Aufbau ist aber effektiv kein Gewinn an Breite erzielt, da die Breite der Längsrippe/Ringnut der wirksamen Breite der in Eingriff stehenden Zähne verlorengeht, so daß bei gleicher Breite insgesamt nur eine geringere Leistung übertragen werden kann.

Um bei Verwendung einer Längsrippe eine bessere Biegewilligkeit zu erreichen, schlägt die DE-PS 39 09 949 C2, bzw. die prioritätsgleiche EP 389 741 A2, vor, auch die auf den Zahnriemen angeordnete Längsrippe mit Quernuten zu versehen.
Der Nachteil besteht darin, daß der Riemen nicht, bzw. nur mit großem Abfall, in beliebiger Breite abgestochen werden kann.
Wegen der eindeutigen Zuordnung von Riemenrippe zu Scheibennut ist es erforderlich, daß die Riemenbreite nebst Anordnung der Rippe auf dem Riemen bei der Produktion des Riemens (der Riemen) stets genau eingehalten wird.

Es ist die Aufgabe der vorliegenden Erfindung, eine aus Synchronriemen und Synchronscheibe bestehende formschlüssige und selbstführende Antriebsanordnung zu beschreiben, bei der der Synchronriemen sowohl endlich als auch endlos produzierbar und in jeder beliebigen Breite ablängbar (abstechbar) ist.

Mit der in Anspruch 1 umschriebenen Anordnung wird ein Antriebselement mit selbstführenden Eigenschaften und - verglichen mit herkömmlichen formschlüssigen selbstführenden Antrieben - verringerter Polygonwirkung (Rattern) geschaffen.

Der erfindungsgemäße Synchronriemen, z. B. als endloser Riemen konfektioniert, kann auch über eine Umlenkrolle laufen, die auf ihrem Umfang unprofiliert ist.

Da die Breite auch des schmalsten Riemens mindestens gleich der Breite einer einzelnen Noppe (eventuell auch weniger) ist, stehen in jedem Fall eine genügende Anzahl (mindestens eine Längsreihe) Noppen sowohl für den synchronen Formschluß in Längsrichtung als auch für die seitliche Selbstführung zur Verfügung.

Mit dieser fast unbeschränkten Breitenunabhängigkeit des Synchronriemens von dem Breitenmaß der erfindungsgemäßen Noppen ist ein wesentlicher Vorteil während der Produktion des Riemens gegeben. Aufgrund des gewählten Rasters und weil jede Noppe bereits eine Selbstführungswirkung ausübt, ist es möglich, einen Riemen mit großer Breite - z. B. als Meterware - herzustellen, der anschließend entsprechend den Kundenwünschen auf geringere Breiten zugeschnitten wird. Es brauchen auch keine verschiedenen Riemenbreiten vorgehalten zu werden. Es wird lediglich eine einzige Breite produziert und dann kundenspezifisch entsprechend der Wickelbreite zugeschnitten.

Darüberhinaus ist der erfindungsgemäße Riemen (z. B. verglichen mit pfeilverzahnten und bogenverzahnten Riemen) laufrichtungsungebunden.

Werden die Noppenelemente, bezogen auf die Längsachse, bzw. bezogen auf das Lot zur Längsachse, unter einem Winkelversatz, z. B. von 30 bis 45°, angeordnet, dann wird ein ruhiges Laufen des Riemens aufgrund kontinuierlichen Eingriffs erzielt.

Die auf dem Antriebsrad vorzusehenden Ausnehmungen werden vorzugsweise etwas größer als die auf dem Riemen befindlichen Noppen gewählt. Dies hat einen sauberen Eingriff und verminderte Geräuschentwicklung zur Folge.

Mit einer zahnseitigen Gewebe(auf)lage aus Polyamid ergibt sich eine verbesserte Stabilität der Noppen. Gleichzeitig wird durch die mit dem Polyamidgewebe hergestellten Oberfläche(nstruktur) auch ein geringerer Reibbeiwert und eine geringere Abnutzung und damit eine größere Lebensdauer (Laufleistung) des Riemens erzielt.

Die Erfindung umfaßt auch die geometrische Umkehr der aus Snchronriemen und Synchronscheibe bestehenden formschlüssigen und selbstführenden Antriebsanordnung. D. h.: noppenförmige, auf der Antriebsscheibe befindliche Erhebungen korrespondieren mit hierzu kongruent auf der Riemenlauffläche angeordneten Ausnehmungen.

Auch sind Kombinationen von beiden Grundprinzipien denkbar: Auf der Synchronscheibe befinden sich sowohl noppenförmige Erhebungen als auch Vertiefungen, die zu entsprechenden, auf der Lauffläche des Riemens befindlichen Vertiefungen und Erhebungen korrespondieren.

Die beigefügten Zeichnungen dienen zur Erläuterung verschiedener Ausführungsbeispiele.
Die Figuren 1, 2 und 3 zeigen in perspektivischer Sicht Ausschnitte aus erfindungsgemäßen Synchronriemen;
die Fig. 4 zeigt, ebenfalls in perspektivischer Sicht, einen Synchronriemen nebst zugehöriger Synchronscheibe;

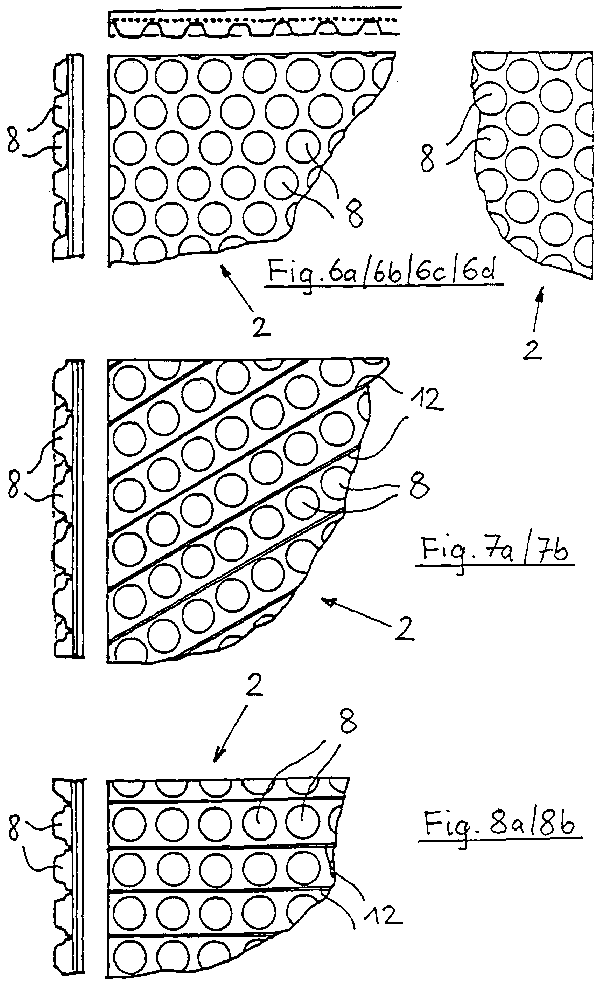

die Fig. 5a/5b zeigen in Draufsicht und von der Seite eine bevorzugte Ausbildungsform für einen Testriemen;
Die Fig. 6a/6b/6c/6d, 7a/7b und 8a/8b zeigen in Draufsicht verschiedene Anordnungen von auf der Riemenlaufseite befindlichen Noppen;
Die Fig. 9a/9b zeigen in perspektivischer Darstellung und in Draufsicht einen mit Gewebe verstärkten Riemen.

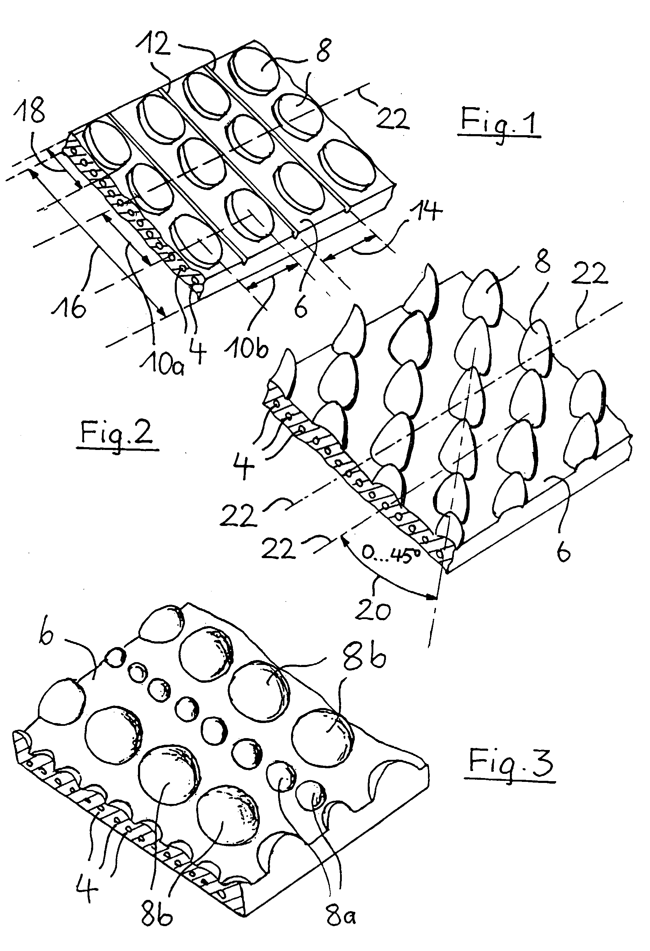

Der in Fig. 1 dargestellte kurze Abschnitt eines Synchronriemens 2 besteht vorzugsweise aus Polyurethan und ist in Längsrichtung mit einer Verstärkungseinlage 4, vorzugsweise aus Polyamid, Glasfasern oder Stahlseilen versehen. Auf der Lauffläche 6 des Riemens 2 sind in regelmäßigen Abständen 10a, 10b voneinander Noppen 8 angeordnet. Die Noppen 8 weisen kegelstumpf- bis scheibenförmige Gestalt auf. Auch beliebige andere, z. B. halbellipsoide Grundformen sind denkbar.

Zusätzlich zu den Noppen 8 befinden sich in Laufrichtung, aber auch unter bestimmten Winkeln als Quernuten 12 ausgebildete Wickelnasen ebenfalls in regelmäßigen Abständen 14 voneinander auf der Lauffläche 6 des Riemens 2.

Die Breite 16 des Riemens 2 ist mindestens gleich der Noppenbreite 18 oder beträgt ein Vielfaches der Noppenbreite 18: Im dargestellten Ausführungsbeispiel ergibt die Summe von drei Noppen 8 die Riemenbreite 16.

Die in Fig. 2 dargestellten Noppen 8 unterscheiden sich in Gestalt und Anordnung von den in Fig. 1 dargestellten Noppen 8. Hier sind die Noppen 8 unter einem Winkel 20 von 45° bezogen auf die Riemenlängsachse 22 angeordnet.

Die in Fig. 3 dargestellten Noppen 8 sind halbkugelförmig ausgebildet. Es wechselt sich jeweils eine quer auf dem Riemen 2 angeordnete Reihe kleinerer halbkugeliger Noppen 8a mit einer Reihe größerer Halbkugel-Noppen 8b ab.

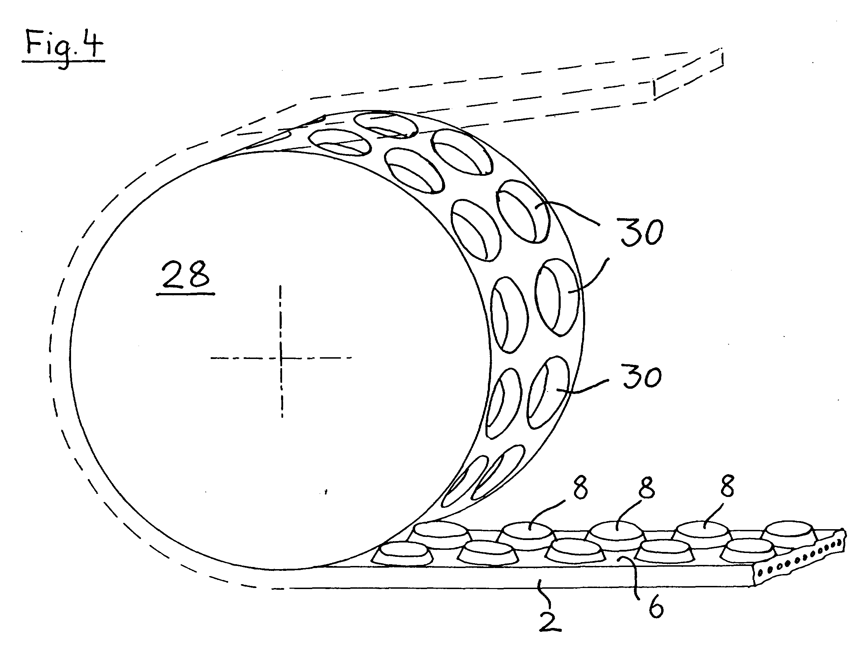

Auch diese Noppen 8a, 8b korrespondieren zu entsprechenden Vertiefungen 30 auf der zugeordneten Antriebsscheibe 28 (Fig. 4).

Entscheidend ist, daß geometrische Körper unterschiedlicher Gestalt und Größe ineinander greifen, wodurch sich eine Selbstführung durch Rundumformschluß ergibt.

Die in den Figuren 6 bis 8 dargestellten Noppen 8 haben kegelstumpfförmige Gestalt.

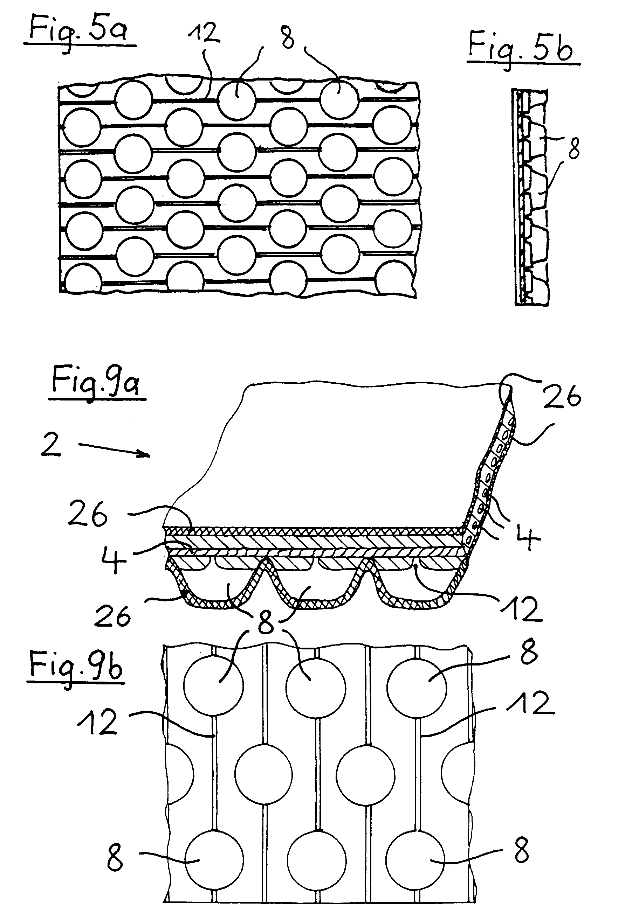

Die in den Figuren 9a und 9b abgebildete Ausführungsvariante weist folgenden Aufbau auf: Der Riemen 2 besteht im wesentlichen aus Polyurethan (auch Gummi oder andere Kunststoffe). Als Zugträger ist in Längsrichtung eine Stahlcordeinlage 4 eingearbeitet. Sowohl die noppenförmig (8) geprägte Vorderseite (Lauffläche 6) als auch die Rückseite 24 des Riemens 2 ist mit einer z. B. aus Polyamid (PA) bestehenden Gewebelage 26 versehen. Die als Quernuten 12 ausgebildeten Wickelnasen sind nicht funktionsrelevant.

Die Erfindung ist nicht auf die beschriebene Antriebsanordnung beschränkt. Transporttechnik, Lineartechnik und Hubtechnik sind weitere Anwendungsbereiche. Dabei sind auch Kombinationen verschiedener Antriebselemente denkbar.

### Bezugszeichenliste

- 2: Synchronriemen
- 4: Verstärkungseinlage
- 6: Lauffläche
- 8: Noppe(n), Noppenprofil
- 8a: kleinere halbkugelige Noppe(n)
- 8b: größere halbkugelige Noppe(n)
- 10: Abstand der Noppen voneinander:
- 10a: seitlicher Abstand
- 10b: Abstand in Längsrichtung
- 12: Quernuten (Wickelnasen)
- 14: Abstand der Quernuten (Wickelnasen) voneinander
- 16: Riemenbreite
- 18: Noppenbreite
- 20: Winkel der Noppenanordnung bezogen auf Riemenlängsachse
- 22: Riemenlängsachse
- 24: Riemenrücken
- 26: Gewebelage
- 28: Synchronscheibe
- 30: Vertiefungen (Ausnehmungen) auf der Synchronscheibe

## Patentansprüche

1. Aus Synchronriemen (2) und Synchronscheibe bestehende formschlüssige und selbstführende Antriebsanordnung,
**gekennzeichnet durch**
auf der Lauffläche (6) des Synchronriemens (2) befindliche Noppen (8) und entsprechende, auf der Antriebsfläche der Synchronscheibe (28) befindliche Ausnehmungen (30), wobei das Profil der Ausnehmungen (30) kongruent zu dem Noppenprofil (8) ist.

2. Antriebsanordnung nach Anspruch 1,
**dadurch gekennzeichnet,**
daß die Breite (16) des Riemens (2) größer oder gleich der Breite (18) einer einzelnen Noppe (8) ist.

3. Antriebsanordnung nach Anspruch 1 oder 2,
**dadurch gekennzeichnet,**
daß die auf der Lauffläche (6) des Riemens (2) befindlichen Noppen (8), sowie die hierzu kongruenten, in der Antriebsfläche der Synchronscheibe (28) befindlichen Ausnehmungen (30), zylindrische, halbkugelige, halbellipsoide, kegel- oder kegelstumpfförmige Gestalt aufweisen.

4. Antriebsanordnung nach Anspruch 1 bis 3,
**dadurch gekennzeichnet,**
daß die Noppen (8) zueinander unter einem Winkel (20) bezogen auf die Längsachse (22) des Riemens (2) angeordnet sind.

5. Antriebsanordnung nach einem der Ansprüche 1 bis 4,
**dadurch gekennzeichnet,**
daß die auf der Synchronscheibe (28) angeordneten Ausnehmungen (30) etwas größer als die auf dem Riemen (2) befindlichen Noppen (8) sind.

6. Antriebsanordnung nach einem der Ansprüche 1 bis 5,
**dadurch gekennzeichnet,**
daß sich auf der laufseitigen und/oder auf der rückseitigen Oberfläche (6 und/oder 24) des Riemens (2) eine Gewebelage (26) befindet,
wobei das Gewebe (26) die Oberfläche der Noppen (8) ganz oder teilweise bedeckt.
